Europäisches Patentamt

European Patent Office

Office européen des brevets

(19)

(11) Veröffentlichungsnummer : **0 166 950**
**B1**

(12) **EUROPÄISCHE PATENTSCHRIFT**

(45) Veröffentlichungstag der Patentschrift :
17.08.88

(21) Anmeldenummer : 85106454.3

(22) Anmeldetag : 24.05.85

(51) Int. Cl.⁴ : **G 21 C 15/18, G 21 C 13/06**

(54) **Im Naturumlauf betreibbare Kernreaktor-Deckelkühlung.**

(30) Priorität : 07.06.84 DE 3421225

(43) Veröffentlichungstag der Anmeldung :
08.01.86 Patentblatt 86/02

(45) Bekanntmachung des Hinweises auf die Patenterteilung : 17.08.88 Patentblatt 88/33

(84) Benannte Vertragsstaaten :
DE FR GB IT

(56) Entgegenhaltungen :
EP-A- 0 055 643
EP-A- 0 095 428
EP-A- 2 506 063

(73) Patentinhaber : INTERATOM Gesellschaft mit beschränkter Haftung
Friedrich-Ebert-Strasse
D-5060 Bergisch Gladbach 1 (DE)

(72) Erfinder : Wagner, Jürgen, Dipl.-Ing.
Zedernweg 11
D-5253 Lindlar (DE)

(74) Vertreter : Mehl, Ernst, Dipl.-Ing. et al
Postfach 22 13 17
D-8000 München 22 (DE)

## Beschreibung

Die vorliegende Erfindung betrifft einen flüssigmetallgekühlten Kernreaktor nach dem Oberbegriff des ersten Anspruchs. Dabei wird als Flüssigmetall üblicherweise flüssiges Natrium verwendet, das den Reaktorbehälter bis nahe unter dessen Deckel füllt und sich während des Betriebes auf Temperaturen um 550 °C befindet. Der Reaktordeckel, der aus einem festen Teil (dem sogenannten « Dach ») und exzentrisch darin angeordneten Drehdeckeln bestehen kann, wird dabei erheblichen Belastungen durch die Wärmestrahlung des Kühlmittels sowie durch Konvektion des Schutzgases ausgesetzt. Zur Sicherung ihrer Integrität sind die einzelnen Deckelteile an einen mit Gas, vorzugsweise Luft, betriebenen Kühlkreislauf angeschlossen, der mit Hilfe von elektrisch angetriebenen Gebläsen aufrecht erhalten wird (vgl. die EP-A-95 428). Bei bisher ausgeführten Anlagen dieser Art (SNR 300, Phénix, Super-Phénix) ist davon ausgegangen worden, daß zur Aufrechterhaltung eines Kühlmittelumlaufes, der zur Abfuhr der im abgeschalteten Reaktor erzeugten Nachzerfallswärme ausreicht, die Kühlmittelpumpen wenn auch mit verminderter Leistung weiterbetrieben werden müssen. Zur Energieversorgung dieser Pumpen und auch der oben erwähnten Gebläse für die Deckelkühlung stehen bei unterstelltem Ausfall des Netzes besondere Notstromerzeuger zur Verfügung. Sollen diese immerhin aufwendigen Anlageteile eingespart werden, so muß nicht nur ein Umlauf des Kühlmittels durch Naturkonvektion sichergetellt sein (was nicht Gegenstand dieser Erfindung ist), sondern auch eine ebenfalls im Naturumlauf betriebene Deckelkühlung, die ausreicht, um eine Erhitzung des Deckels auf eine noch zulässige Temperatur zu begrenzen.

Aufgabe der vorliegenden Erfindung ist eine Ausgestaltung der bekannten Einrichtungen zur Kühlung des Deckels von Kernreaktoren der beschriebenen Art dahingehend, daß sie bei Ausfall der Gebläse und abgeschaltetem Reaktor auch im Naturumlauf betrieben werden kann.

Die Lösung dieser Aufgabe erfolgt durch die im kennzeichnenden Teil des ersten Anspruchs angegebenen Mittel. Das Ingangsetzen und Aufrechterhalten eines durch Naturkonvektion betriebenen Kühlgas-Kreislaufes wird dadurch ermöglicht, daß dieser kurzgeschlossen wird unter Umgehung der stillstehenden Gebläse, Wärmetauscher und Armaturen und der zu ihnen führenden Leitungen, die wegen der Anordnung vieler anderer betriebswichtiger Teile auf dem Kernreaktordeckel einen abgewinkelten und zum Teil auch auf unterschiedlicher geodätischer Höhe liegenden Verlauf nehmen müssen. Da die Luft beim Durchströmen des Kühlkreislaufes nicht aufaktiviert wird oder mit dem Kühlmittel in Berührung kommt, bildet diese erwärmte Luft keine Gefahr für das Bedienungspersonal und kann unbedenklich in das Innere des Kernreaktorgebäudes abgeblasen werden ; von hier aus wird auch die abgekühlte Luft wieder angesaugt. Es versteht sich von selbst, daß der Höhenstand zwischen der Einlaß- und Auslaßleitung des Kühlkreislaufes so groß bemessen sein muß, daß in diesem ein durch Naturkonvektion angetriebener Kreislauf auch innerhalb einer angemessenen Zeit (z. B. 1 Stunde) in Gang kommt, während derer die Temperatur des Deckels von der Betriebstemperatur auf die zulässige Höhe steigen kann.

Lassen die baulichen Gegebenheiten im Einzelfalle einen solchen ausreichenden Abstand der beiden Leitungen der Höhe nach nicht zu, so empfiehlt sich die im zweiten Anspruch angegebene Ausgestaltung der Erfindung. Aus Platzgründen besteht ein Kühlkreislauf der beschriebenen Art aus einer in erheblichem Abstand (z. B. von 7 m) über dem Deckel angeordneten Hauptleitung, die über im wesentlichen senkrecht verlaufende Stichleitungen mit einzelnen, je für sich kühlbaren Sektoren des Deckels in Verbindung stehen. Begünstigt diese Höhendifferenz schon an sich das Ingangkommen einer Konvektionsströmung, so kann dies dadurch unterstützt werden, daß eine im Normalbetrieb geschlossene, nahe dem unteren Ende der einen Leitung eines Stichleitungspaares angebrachte Klappe erst geöffnet und nach Ingangkommen der Zirkulation wieder geschlossen wird. Da für diesen Vorgang wie oben ausgeführt, erhebliche Zeit zur Verfügung steht, kann die Bedienung der Klappen von Hand erfolgen, wobei diese in bekannter Weise durch Gegengewichte oder Federn unterstützt werden kann. Auf automatische Betätigungsvorrichtungen kann verzichtet werden.

Die genannte Zeitspanne reicht auch aus, um entsprechend der im dritten Anspruch vorgeschlagenen Ausgestaltung der Erfindung Kamine (wobei es sich um einfache Blechkonstruktionen handeln kann) auf die zum Gebäudeinneren hin geöffneten Klappen zu setzen, wodurch eine Beschleunigung der Zirkulation erzielt werden kann. Die Kamine, die wegen der Behinderung anderer Arbeiten im Normalbetrieb zweckmäßigerweise nicht auf dem Drehdeckel angebracht werden, können mittels der im Reaktorgebäude ohnehin vorhandenen Hebezeuge bei Bedarf an ihren Einsatzort gebracht werden.

Ein Ausführungsbeispiel der Erfindung ist in der Zeichnung dargestellt, und zwar zeigt

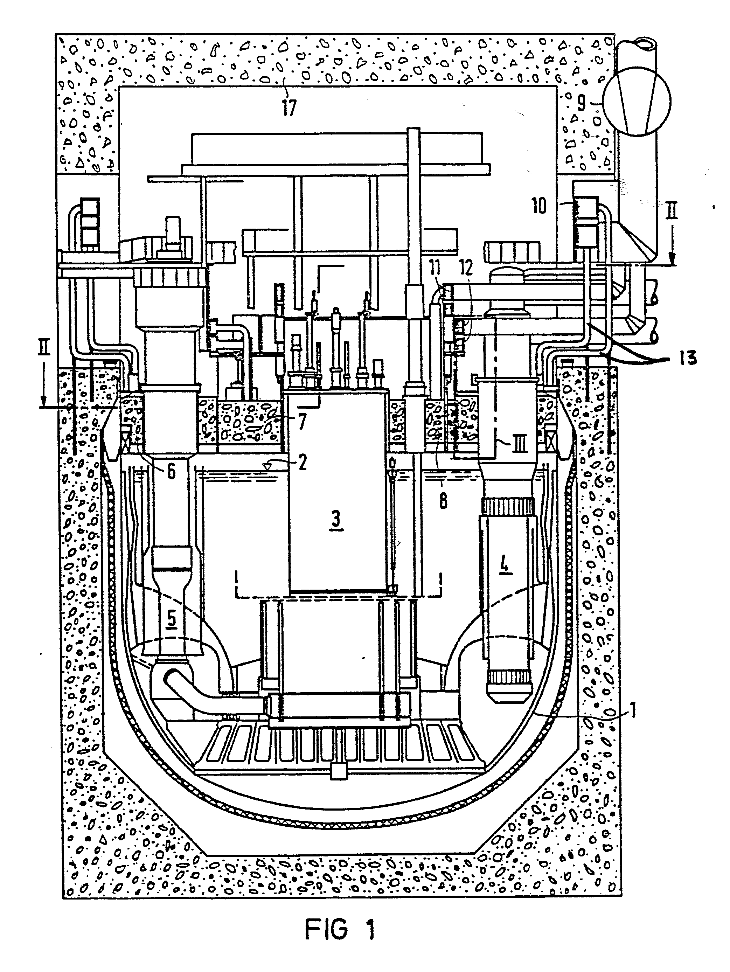

Fig. 1 einen mit der erfindungsgemäßen Deckelkühlung versehenen Kernreaktor im Längsaxialschnitt entsprechend der Linie I-I der Fig. 2 und

Fig. 2 einen Teil einer Daraufsicht und einen Teil eines Querschnittes entsprechen den Linien II-II der Fig. 1 und

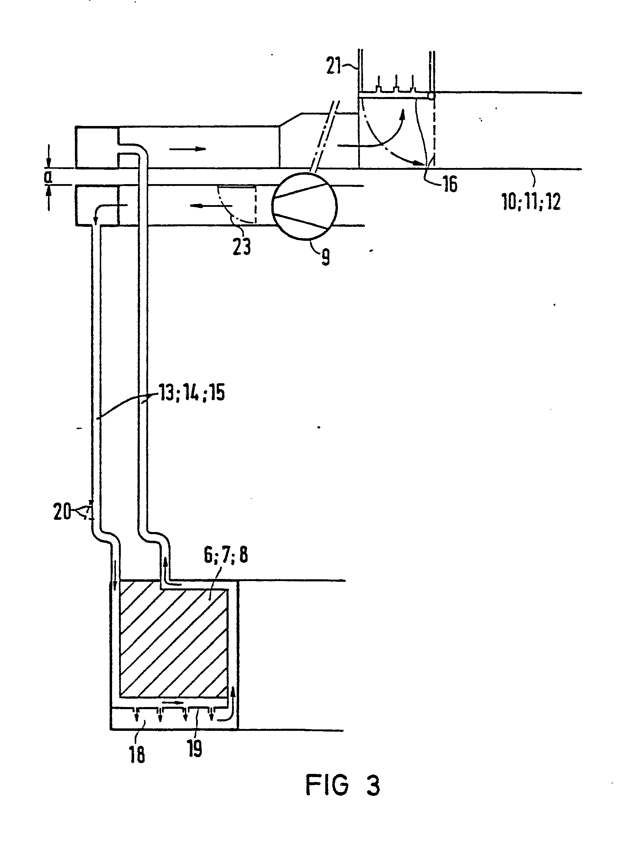

Fig. 3 in vergrößertem Maßstab die Einzelheit III der Fig. 1.

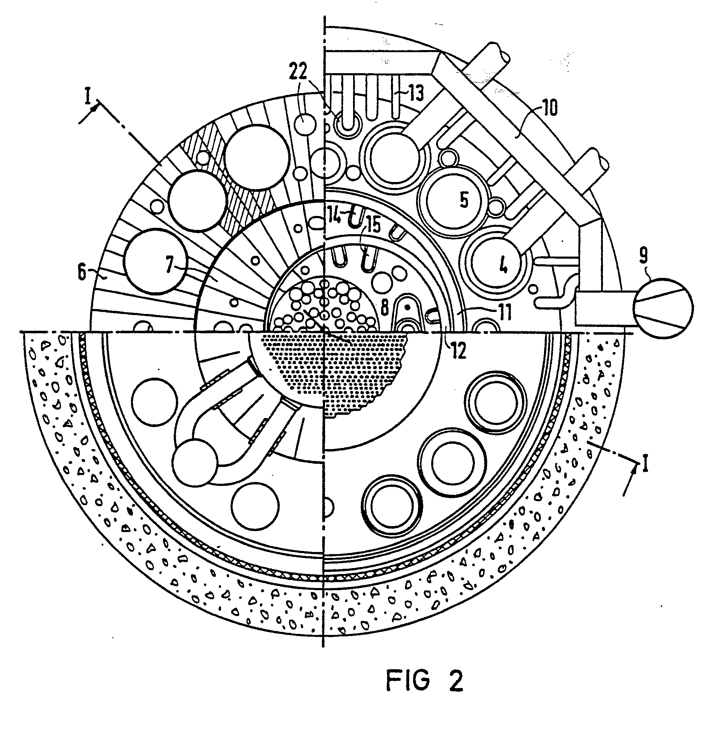

In einem Reaktortank 1, der bis zu einem Betriebsspiegel 2 mit flüssigem Natrium gefüllt ist, ist ein Reaktorkern 3 angeordnet. Die in diesem erzeugte Wärme wird im Normalbetrieb in Zwischenwärmetauschern 4 an ein Sekundärfluid, meist ebenfalls Natrium, abgegeben. Der Kühlkreislauf im Reaktortank 1 wird durch Pumpen 5 aufrecht erhalten. Der Reaktortank 1 ist nach oben durch einen Deckel 6 verschlossen, in den ein erster, großer Drehdeckel 7 eingelassen ist, der wiederum einen zweiten, kleineren Drehdeckel 8 exzentrisch umfaßt. Die vom Natriumspiegel 2 an das Deckelsystem 6-8 abgegebene Hitze wird durch eine besondere, für jeden Deckelteil einzeln vorhandene Kühleinrichtung abgeführt. Diese besteht aus einem hier nur schematisch angedeuteten Gebläse 9 und je einer Ringleitung 10 (für den Festdeckel 6), 11 (für den großen Drehdeckel 7) und 12 (für den kleinen Drehdeckel 8). Dabei sind die einzelnen Drehdeckel in voneinander getrennte Bereiche aufgeteilt (für den Festdeckel 6 in der Fig. 2 beispielhaft durch Schraffieren kenntlich gemacht), deren jeder über Stichleitungen 13, 14, 15 mit dem dazugehörigen Ringkanal 10, 11, 12 verbunden ist. Jeder der Ringkanäle 10, 11, 12 ist in zwei übereinander angeordnete Hälften aufgeteilt, deren eine den Zustrom und deren andere den Abstrom der Kühlluft aufnimmt. Dabei sollten die beiden Kanalhälften, wenn dies die beengten Platzverhältnisse oberhalb des Drehdeckelsystems 6, 7, 8 zulassen, in der vertikalen um ein möglichst großes Maß a voneinander entfernt angeordnet sein.

Beim Ausfall der Netzversorgung für den Reaktor, die zu einem Abschalten desselben führt, erfolgt die Abfuhr der Nachzerfallswärme weiterhin über besondere Tauchwärmetauscher 22, jetzt jedoch durch reine Naturkonvektion im Reaktortank 1, da ja das Kühlmittel nicht mehr durch die Pumpen 5 in Umlauf versetzt wird. Ebenso muß die Kühlung des Deckelsystems 6, 7, 8 ohne Zuhilfenahme der Gebläse 9 fortgesetzt werden (das den Reaktortank 1 füllende Kühlmittel 2 kann zunächst sogar seine Temperatur erhöhen und damit auch die Wärmebelastung des Dekkelsystems). Das Aufkommen einer die Wärmeabfuhr bewerkstelligenden Konvektionsströmung wird begünstigt einmal durch die oben angesprochene Anordnung der beiden Stränge der Ringkanäle 10, 11, 12 auf verschiedener geodätischer Höhe und durch die Anordnung von Klappen 16, 23 in jedem Ringkanal, die während des Reaktorbetriebes eine an der Oberseite jedes Ringkanals 10, 11, 12 angebrachte Öffnung verschließen und nur bei dem angesprochenen Störfall in ihre zweite, gestrichelte Lage geklappt werden ; sie schließen dann den jeweiligen Ringkanal kurz, so daß die Luftströmung unmittelbar aus dem Inneren eines den Kernreaktor umgebenden Gebäudes 17 ein- und auch wieder in dieses austreten kann. Ebenfalls begünstigt wird das Auftreten einer Konvektionsströmung durch den senkrechten Abstand zwischen dem an der Unterseite jedes Deckels 6, 7, 8 angebrachten eigentlichen Kühlraum 18 und dem dazugehörigen Ringkanal 10, 11, 12. Eine gleichmäßige Verteilung der Kühlluftströmung wird durch ein den Raum 18 nach oben begrenzendes Düsenblech 19 gewährleistet. Zunächst wird die warme Luft das Bestreben haben, in beiden Zweigen der Stichleitungen 13, 14, 15 aufzusteigen, wodurch das Ingangkommen einer in einer definierten Richtung sich vollziehenden Zirkulation eher behindert wird. Daher ist in einer der Leitungen eine weitere, nach außen, d. h. ebenfalls in das Innere des Reaktorgebäudes 17 öffnende Klappe 20 eingebaut, die während des normalen Reaktorbetriebes geschlossen bleibt. Soll das Ingangkommen der Zirkulation beschleunigt werden, so wird die Klappe 20 geöffnet und erst wieder geschlossen, wenn die heiße Luft in der anderen Leitung (hier der rechten) soweit aufgestiegen ist, daß bei Überschreitung der Öffnung der Klappe 20 die Luftzirkulation sofort mit nennenswertem Durchsatz einsetzt. Reicht dieser Durchsatz nicht aus, um eine ausreichende Wärmeabfuhr zu gewährleisten, so kann der Zug dadurch verbessert werden, daß auf die obengelegenen Stränge der Ringleitungen 10, 11, 12 im Bereich der die Öffnungen freigebenden Klappen 16 zusätzliche, quasi dicht abschließende Kamine 21 eingesetzt werden.

**Patentansprüche**

1. In einem Gebäude (17) angeordneter flüssigmetallgekühlter Kernreaktor mit einem den Reaktorbehälter (1) abschließenden Deckel (6, 7, 8), der an mindestens einen mit Hilfe von Gebläsen (9) betriebenen Kühlkreislauf (10, 11, 12) angeschlossen ist, wobei Einlaß- und Auslaßleitung der Kühlkreisläufe (10, 11, 12) in unterschiedlicher Höhe (a) angeordnet sind, dadurch gekennzeichnet, daß in den Kühlkreisläufen (10, 11, 12) bei Stillstand der Gebläse (9) Klappen (16 bzw. 23) öffenbar sind, die Verbindungen zwischen dem Inneren der Aus- bzw. Einlaßleitung und dem Inneren des Gebäudes (17) freigeben, und Klappen (16 bzw. 23) schließbar sind, die die Verbindung zu den Gebläsen und den übrigen Teilen der Kühlkreisläufe absperren.

2. Reaktor nach Anspruch 1, mit zu einzelnen Elementen des Deckels (6, 7, 8) führenden, von den Kühlkreislauf-Hauptleitungen (10, 11, 12) abzweigenden Stichleitungen (13 ; 14 ; 15), dadurch gekennzeichnet, daß in mindestens einer der Stichleitungen (13, 14, 15) eine bei Stillstand der Gebläse (9) nacheinander öffen- und schließbare weitere Klappe (20) vorhanden ist.

3. Reaktor nach Anspruch 1, dadurch gekennzeichnet, daß auf die zum Inneren des Gebäudes (17) offenen Klappen (16) der jeweils höher gelegenen Leitung jedes Kühlkreislaufes (10, 11, 12) Kamine (21) aufsetzbar sind.

4. Reaktor nach Anspruch 1, dadurch gekennzeichnet, daß die Klappen (16 bzw. 23) in ihrer einen Endlage zugleich die Verbindung der Aus- bzw. Einlaßleitung der Kühlkreisläufe (10, 11, 12) zum übrigen Teil desselben absperren, und die Verbindung zwischen dem Inneren der Aus- bzw. Einlaßleitung und dem Inneren des Gebäudes (17) freigeben als auch in ihrer anderen Endlage zugleich die Verbindung der Aus- bzw. Einlaßleitung der Kühlkreisläufe (10, 11, 12) zum übrigen Teil desselben freigeben und die Verbindung zwischen dem Inneren der Aus- bzw. Einlaßleitung und dem Inneren des Gebäudes absperren.

## Claims

1. A liquid metal cooled nuclear reactor disposed in a building (17) with the reactor vessel (1) being sealed off by a cover (6, 7, 8), which is connected to at least one cooling circuit (10, 11, 12) operated by means of blowers (9), the inlet and outlet duct of the cooling circuit (10, 11, 12) being disposed at a different height (a), characterised in that, in the event of stoppage of the blowers (9), flaps (16 or 23) may be opened in the cooling circuits (10, 11, 12) which release connections between the interior of the outlet or inlet duct and the interior of the building (17), and flaps (16 or 23) may be closed, closing off the connection to the blowers and the remaining parts of the cooling circuits.

2. Reactor according to claim 1, with branch lines (13, 14, 15) leading to individual elements of the cover (6, 7, 8) and branching off the main ducts (10, 11, 12) of the cooling circuits, characterised in that there is present in at least one of the branch lines, (13, 14, 15) a further flap (20) capable of opening and closing successively in the event of stoppage of the blowers (9).

3. Reactor according to claim 1, characterised in that flues (21) may be placed on those flaps (16), open to the interior of the building (17), of the respectively higher duct of each cooling circuit (10, 11, 12).

4. Reactor according to claim 1, characterised in that the flaps (16 or 23) in their one final position simultaneously close off the connection of the outlet or inlet duct of the cooling circuits, (10, 11, 12) to the remaining part of the same, and release the connection between the interior of the outlet or inlet duct and the interior of the building (17), and also in their other final position simultaneously release the connection of the outlet or inlet duct of the cooling circuits (10, 11, 12) to the remaining part of the same, and close off the connection between the interior of the outlet or inlet duct and the interior of the building.

## Revendications

1. Réacteur nucléaire refroidi par du métal liquide, disposé dans un puits de cuve (17) et comprenant une dalle (6, 7, 8) fermant la cuve du réacteur (1) et raccordée à au moins un circuit de refroidissement (10, 11, 12) fonctionnant à l'aide de ventilateurs (9), les conduits d'entrée et de sortie des circuits de refroidissement (10, 11, 12) étant à des niveaux (a) différents, caractérisé en ce que dans les circuits de refroidissement (10, 11, 12), peuvent être ouverts, lorsque les ventilateurs (9) sont arrêtés, des volets (16 et 23) de façon à mettre en communication l'intérieur du conduit d'entrée et de sortie et l'intérieur du puits de cuve (17) et peuvent être fermés des volets (16 et 23) qui interrompent la communication vers les ventilateurs et vers les autres parties du circuit de refroidissement.

2. Réacteur suivant la revendication 1, comprenant des conduits de dérivation (13 ; 14 ; 15) issus des conduits principaux du circuit de refroidissement et allant aux éléments individuels de la dalle (6, 7, 8), caractérisé en ce qu'il est prévu, dans l'un au moins des conduits de dérivation (13, 14, 15), un autre volet (20) pouvant successivement s'ouvrir et se fermer lorsque les ventilateurs (9) sont arrêtés.

3. Réacteur suivant la revendication 1, caractérisé en ce que des cheminées (21) peuvent être montées sur les volets (16), débouchant à l'intérieur du puits de cuve (17), du conduit situé au niveau le plus élevé de chaque circuit de refroidissement (10, 11, 12).

4. Réacteur suivant la revendication 1, caractérisé en ce que les volets (16 et 23) interrompent en l'une de leurs positions d'extrémité, en même temps la liaison du conduit de sortie et du conduit d'entrée des circuits de refroidissement (10, 11, 12) avec la partie restante de ceux-ci, et mettent en communication l'intérieur du conduit de sortie et d'entrée et l'intérieur du puits de cuve (17), tandis que dans leur autre position d'extrémité, ils mettent en communication le conduit de sortie et d'entrée des circuits de refroidissement (10, 11, 12) avec l'autre partie de ceux-ci et ils interrompent la communication entre l'intérieur du conduit de sortie et d'entrée et l'intérieur du puits de cuve.

FIG 1

FIG 2

FIG 3